# EUROPÄISCHE PATENTSCHRIFT

(11) **EP 2 290 886 B1**
(45) Veröffentlichungstag und Bekanntmachung des Hinweises auf die Patenterteilung: **30.11.2016**
(21) Anmeldenummer: 10182886.1
(22) Anmeldetag: 14.06.1999
(51) Int. Cl.: H04L 12/58, H04W 4/14, H04W 4/18, H04W 88/18, H04M 1/725

(54) **Verfahren zur Übertragung von Kurznachrichten**
Method for transmitting short messages
Procédé de transmission de messages courts

(30) Priorität: 08.12.1998 DE 19856441
(43) Veröffentlichungstag der Anmeldung: 02.03.2011
(62) Teilanmeldung aus: 05016522.4
(73) Patentinhaber: IPCom GmbH & Co. KG, 82049 Pullach (DE)
(72) Erfinder: Fischer, Ralf, 31199 Diekholzen (DE); Hans, Martin, 31162, Bad Salzdetfurth (DE); Kowalewski, Frank, 37085 Göttingen (DE); Schulz, Holger, 10587 Berlin (DE); Schmidt, Gunnar, 78052 Villingen-Schwenningen (DE)
(74) Vertreter: 2s | ip Schramm Schneider Patentanwälte Rechtsanwälte

(56) Entgegenhaltungen:
- EP-A- 0 689 368
- WO-A-97/08906
- WO-A-98/03005
- BOSCH: "Generalised Structure for a Multimedia Messaging Service", ETSI STC SMG1+SMG4+SMG12 MULTIMEDIATDOC, XX, XX, Nr. 43/98, 3. Dezember 1998 (1998-12-03), XP002431202,

## Beschreibung

Die Erfindung betrifft ein Verfahren zur Übertragung von Kurznachrichten nach der Gattung des Anspruchs 1, eine Mitteilung nach der Gattung des Anspruchs 6, eine Teilnehmerstation nach der Gattung des Anspruchs 9 und einen Übertragungsrahmen nach der Gattung des Anspruchs 10.

Es sind bereits Kurznachrichtendienste bekannt, die dazu dienen, einem Teilnehmer eines Telekommunikationsnetzes eine Kurznachricht zu senden, ohne dass vorher eine Telekommunikationsverbindung zu diesem Teilnehmer aufgebaut werden muss. Dies ist besonders in Mobilfunksystemen von Bedeutung, da dort Teilnehmer oftmals nicht erreichbar sind. Dabei werden für den Teilnehmer eingehende Kurznachrichten von einem Netzbetreiber des Telekommunikationsnetzes gespeichert und zu einem späteren Zeitpunkt an diesen Teilnehmer übermittelt. Dazu wird der Teilnehmer vom Eintreffen einer für ihn bestimmten Kurznachricht informiert., so dass er diese dann vom Netzbetreiber herunterladen kann.

Als Kurznachrichtendienst gemäß dem GSM-Standard (Global System for Mobile Communications) ist der SMS (Short Message Service) bekannt. Dabei können in einer Kurznachricht bis zu 160 7-Bit ASCII-Textzeichen (American Standard Code for Information Interchange) übertragen werden. Die Übertragung von längeren Texten ist mit Hilfe von verketteten Kurznachrichten möglich Da nur eine Textübertragung gemäß dem GSM-Standard vorgesehen ist, müssen. bei.. der Übertragung von binären Daten, wie beispielsweise Audiodaten, Bilddaten, oder dergleichen diese in das Textformat umgewandelt und nach dem Empfang wieder in das Binärformat zurückgewandelt werden. Dabei ist nur der Zugriff auf den gesamten Inhalt einer Kurznachricht möglich. Dadurch werden gegebenenfalls auch vom adressierten Teilnehmer nicht gewollte Daten der Kurznachricht zu ihm übertragen. Einen Überblick über den Inhalt der Kurznachricht bekommt er erst nach dem Herunterladen der vollständigen Kurznachricht, vom Netzbetreiber.

Das Dokument "Generalised Structure for a Multimedia Messaging Service", Bosch, ETSI STC SMG1+SMG4+SMG12 MULTIMEDIATDOC, Nr.43/98, 03.12. 1998 betrifft einen Vorschlag für eine generalisierte Struktur für einen Multimedia-Nachrichtendienst, bei welchem Strore-and-Forward-Übertragungen ermöglicht werden. Unter Verwendung dieses Mechanismus sollen alle Dienste, wie z.B. SMS-, Fax-, Sprach-, Audio-, Bild-, Video- Mails in einer generalisierte Darstellung, wie ein "Multimedia-Container" (MMC) kombiniert werden. Dieser Container trägt eine beliebige Kombination verschiedener Mediadaten zusammen mit einer eingebetteten Content Associated Information (CAI), um z.B. Typ, Größe, Fähigkeiten usw. der Nutzlast zu identifizieren.

WO 97/08906 betrifft ein System und eine Host-Anordnung zum Übertragen von Emails über ein mobiles Telefonnetzwerk mit Hilfe von Kurztextnachrichten-Routingmitteln, die in dem Netzwerk existieren. Hiernach wird Email gekoppelt mit einer modifizierten Kurztextnachricht, umfassend einen Agenten, der durch das Medium von Steuerzeichen in einer adressierten Mobilstation erkannt wird.

Aufgabe ist es, ein Verfahren zum Übertragen von Kurznachtrichten, eine Mitteilung, eine Teilnehmerstation sowie eine Datenstruktur bereitzustellen, welche für den Teilnehmer verbesserte Informationsmöglichkeiten hinsichtlich Kurznachrichten in einem Telekommunikationsnetz bieten.

Diese Aufgabe wird durch die Gegenstände gemäß den unabhängigen Ansprüchen gelöst.

### Vorteile der Erfindung

Das erfindungsgemäße Verfahren zur Übertragung von Kurznachrichten mit den Merkmalen des Hauptanspruchs hat demgegenüber den Vorteil, dass eine Mitteilung an einen Teilnehmer des Telekommunikationsnetzes in Abhängigkeit einer für den Teilnehmer an das Telekommunikationsnetz abgesetzten Kurznachricht gesendet wird, wobei mit der Mitteilung Daten zum Teilnehmer übertragen werden, die Informationen über den Aufbau und/oder den Inhalt der Kurznachricht umfassen. Auf diese Weise erfährt der Teilnehmer nicht nur, dass eine Kurznachricht für ihn beim Netzbetreiber eingegangen ist. Vielmehr erhält er weitere Informationen über die Kurznachricht, die eine Entscheidung darüber ermöglichen, ob die gesamte Kurznachricht oder nur Teile der Kurznachricht, vom Netzbetreiber heruntergeladen werden sollen. Somit kann der Teilnehmer einfach und komfortabel auf Inhalte von Kurznachrichten zugreifen.

Durch die in den Unteransprüchen aufgeführten Maßnahmen sind vorteilhafte Weiterbildungen und Verbesserungen des im Hauptanspruchs angegebenen Verfahrens möglich.

Besonders vorteilhaft ist es, wenn als Mitteilung ein textbasierter erster Teil der Kurznachricht, der die Daten mit den Informationen uber den Aufbau und/oder den Inhalt der Kurznachricht umfaßt, zum Teilnehmer übertragen wird. Auf diese Weise wird sichergestellt, daß die Mitteilung von möglichst vielen Teilnehmern des Telekommunikationsnetzes lesbar ist, die bereits zum Empfang von textbasierten Kurznachrichten ausgelegt sind. Dies gilt besonders für nach dem GSM-Standard (Global System for Mobile Communications) ausgebildete Mobilfunkgeräte als Teilnehmer eines GSM-Mobilfunknetzes, die zum Empfang und zur Darstellung von textbasierten Kurznachrichten nach dem SMS-Kurznachrichtendienst (Short Message Service) ausgelegt sind. Beim Teilnehmer kann somit anhand der textbasierten Mitteilung festgestellt werden, ob beim Netzbetreiber vorliegende Kurznachrichten überhaupt von ihm lesbar sind, bzw. welche Teile solcher Kurznachrichten von ihm lesbar sind. Bei den Teilnehmern können dann nur die lesbaren Teile der für sie beim Netzbetreiber vorliegenden Kurznachrichten zum Herunterladen ausgewählt werden. Somit wird Übertragungskapazität eingespart.

Ein weiterer Vorteil besteht darin, daß mit den Informationen über den Aufbau und/oder den Inhalt der Kurznachricht Angaben über den Absender der in der Kurznachricht gespeicherten Daten zum Teilnehmer übertragen werden. Somit erhält der Teilnehmer ein weiteres Kriterium für eine Entscheidung zum Herunterladen der beim Netzbetreiber vorliegenden Kurznachricht.

Besonders vorteilhaft ist es, daß von Teilnehmer mittels einer an das Telekommunikationsnetz abgesetzten Auswahlnachricht mindestens ein Teil der Kurznachricht vom Telekommunikationsnetz angefordert wird und daß der mindestens eine angeforderte Teil der Kurznachricht zum Teilnehmer übertragen wird. Somit muß nicht die gesamte Kurznachricht vom Netzbetreiber heruntergeladen werden, sondern nur der vom Teilnehmer gewünschte Teil. Dies ist mittels der Auswahlnachricht besonders einfach möglich und' führt zur Einsparung von Übertragungskapazität.

Ein weiterer Vorteil besteht darin, daß vom Teilnehmer eine Löschungsnachricht an das Telekommunikationsnetz abgesetzt wird und daß in Abhängigkeit der Löschungsnachricht mindestens ein Teil der Kurznachricht gelöscht wird. Auf diese Weise kann der Teilnehmer auch eine selektive Löschung von Teilen der Kurznachricht bewirken, so daß von ihm nicht lesbare oder nicht gewünschte Teile der Kurznachricht gelöscht werden können und nicht unnötig Speicherplatz beim Netzbetreiber beanspruchen.

Ein weiterer Vorteil besteht darin, daß die Informationen über den Aufbau und/oder den Inhalt der Kurznachricht beim Teilnehmer aus der empfangenen Mitteilung ausgelesen und an einer Anzeigevorrichtung dargestellt werden. Auf diese Weise kann der Benutzer oder Teilnehmer selbst den Aufbau und/oder den Inhalt der Kurznachricht auswerten und einen oder mehrere Teile der Kurznachricht besonders komfortabel für eine Weiterverarbeitung auswählen.

Vorteilhaft ist auch, daß die Informationen über den Aufbau und/oder den Inhalt der Kurznachricht direkt in einer Teilnehmerstation des Teilnehmers verarbeitet werden. Auf diese Weise ist eine netzbetreiberunabhängige Verarbeitung möglich, wenn zur Verarbeitung nur Module der Teilnehmerstation, nicht jedoch ein Modul des Netzbetreibers, beispielsweise ein Identifikationsmodul, insbesondere eine SIM-Karte (Subscriber Identitiy Module), verwendet werden.

Vorteilhaft ist jedoch auch eine von der Teilnehmerstation unabhängige Verarbeitung der Informationen über den Aufbau und/oder den Inhalt der Kurznachricht mittels eines Identifikationsmoduls, das beispielsweise vom Netzbetreiber zur Verfügung gestellt wird. Die Mitteilung kann dann unabhängig vom Typ der Teilnehmerstation ausgewertet werden, wodurch eine hohle kompatibilität bei gleichzeitiger Vielfalt von Teilnehmerstationen bezüglich deren Funktionalität und Verarbeitungsmodule erreicht werden kann.

Ein weiterer Vorteil besteht darin, daß mit der Mitteilung eine erste Kopfinformation und eine Nachricht zum Teilnehmer übertragen werden, wobei die erste Kopfinformation zumindest eine Information über den Inhalt der Nachricht und die Nachricht die Informationen über den Aufbau und/oder den Inhalt der Kurznachricht umfaßt. Auf diese weise läßt sich die Art der Weiterverarbeitung der Nachricht in der Teilnehmerstation beziehungsweise durch das Identifikationsmodul steuern, so daß die Informationen über den Aufbau und/oder den Inhalt der Kurznachricht als solche erkannt und in angemessener Weise verarbeitet werden können.

Ein weiterer Vorteil besteht darin, daß mit der Nachricht eine zweite Kopfinformation und Nutzdaten zum Teilnehmer übertragen werden, wobei die erste Kopfinformation eine Information über das Vorhandensein der zweiten Kopfinformation und die zweite Kopfinformation mindestens eine Information über die Art der durchzuführenden Auswertung der Mitteilung umfaßt. Auf diese Weise ist eine differenziertere Steuerung der Weiterverarbeitung der Nachricht möglich.

Vorteilhaft ist auch, daß als Kurznachricht eine Nachricht eines elektronischen Postdienstes, insbesondere eine Internet E-Mail Nachricht, an das Telekommunikationsnetz abgesetzt wird. Auf diese Weise läßt sich der Zugriff auf Nachrichten eines elektronischen Postdienstes auch besonders einfach und Komfortabel in einem Telekommunikationsnetz realisieren.

Ein Vorteil besteht auch darin, daß die Mitteilung als SMS-Nachricht (Short Message Service) gemäß dem GSM-Standard (Global System for Mobile Communications) an den Teilnehmer übertragen wird. Auf diese Weise wird für alle GSM-Endgeräte, die den SMS-Dienst unterstützen, die Möglichkeit geschaffen, über die Mitteilung zumindest Kenntnis über die vorliegende Kurznachricht hinsichtlich ihres Aufbaus und/oder Inhalts zu erlangen, da alle diese Endgeräte in der Lage sind, solche SMS-Nachrichten zu empfangen und wiederzugeben. Somit wird eine hohe Kompatibilität für den Empfang der Mitteilung bei SMS-fähigen Teilnehmerstationen unterschiedlicher Funktionalität erreicht.

Vorteilhaft ist es auch, daß die Quittierungsnachricht in Form einer Kurznachricht für den Sender an das Telekommunikationsnetz abgesetzt wird, wobei eine Mitteilung an den Sender in Abhängigkeit der Quittierungsnachricht gesendet wird und mit der Mitteilung Daten zum Sender übertragen werden, die Informationen über den Aufbau and/oder den Inhalt der Quittierungsnachricht umfassen. Die Kurznachricht und die zugehörige Mitteilung nach Anspruch 1 lassen sich somit in vielfältiger Weise einsetzen, so daß eine einheitliche Nachrichtenversendung im Telekommunikationsnetz gewährleistet werden kann.

Ein Vorteil besteht auch darin, daß die Quittierungsnachricht als SMS-Nachricht gemäß dem GSM-Standard und die Mitteilung als erste Kopfinformation und/oder zweite Kopfinformation für den Sender an das Telekommunikationsnetz abgesetzt werden. Auch dadurch wird eine Lesbarkeit der Quittierungsnachricht bei allen SMS-fähigen Sendern gewährleistet.

Vorteilhaft ist auch, daß vom Teilnehmer mittels einer an das Telekommunikationsnetz abgesetzten Befehlsnachricht mindestens ein Datenfeld der Kurznachricht in Abhängigkeit des Inhalts der Befehlsnachricht verarbeitet wird. Auf diese Weise ermöglicht die Mitteilung über die Kurznachricht nicht nur eine Information über die Kurznachricht, sondern ermöglicht auch deren ferngesteuerte Verarbeitung durch den Teilnehmer.

Ein besonderer Vorteil besteht darin ,daß die Befehlsnachricht beim Teilnehmer in Abhängigkeit der Informationen über den Aufbau und/oder den Inhalt der Kurznachricht automatisch erstellt wird. Auf diese Weise wird der Komfort für den Benutzer beziehungsweise Teilnehmer erheblich erhöht.

Besonders vorteilhaft ist auch, daß die Befehlsnachricht in Abhängigkeit des Leistungsumfangs einer dem Teilnehmer zugeordneten Teilnehmerstation und/oder in Abhängigkeit von vom Teilnehmer vorgegebenen Befehlskriterien erstellt wird. Auf diese Weise wird die ferngesteuerte Verarbeitung der Kurznachricht automatisch an die Möglichkeiten der Teilnehmerstation oder den Bedürfnissen des Benutzers beziehungsweise des Teilnehmers angepaßt, was beispielsweise beim Laden eines oder mehrerer Teile der Kurznachricht in die Teilnehmerstation und beim Löschen oder Weiterleiten von von der Teilnehmerstation nicht lesbaren oder nicht gewünschten Teilen der Kurznachricht von Bedeutung ist.

Ein Vorteil besteht auch darin, daß die Befehlsnachricht in Form einer Kurznachricht für eine Zentralstation, insbesondere eines Netzbetreibers, an das Telekommunikationsnetz abgesetzt wird, wobei eine Mitteilung an die Zentralstation in Abhängigkeit der Befehlsnachricht gesendet wird und mit der Mitteilung Daten zur Zentralstation übertragen werden, die Informationen über den Aufbau und/oder den Inhalt der Befehlsnachricht umfassen. Auf diese Weise wird auch für das Versenden von Befehlen im Telekommunikationsnetz die Form der Kurznachricht und der dazugehörigen Mitteilung gemäß Anspruch 1 verwendet, so daß im Telekommunikationsnetz Einheitlichkeit für die Versendung verschiedener Arten von Informationen, wie Befehlen, Quittierungen und reinen Postdiensten bezüglich des Prinzips einer initial versendeten Mitteilung über eine entsprechend im Telekommunikationsnetz vorliegende Kurznachricht gemäß Anspruch 1 erzielt wird und einheitliche Prinzipien für die Auswertung der Kurznachricht anhand der initial versendeten Mitteilung zur Verfügung gestellt werden können.

Vorteilhaft ist auch, daß die Befehlsnachricht und die Mitteilung direkt in einer Teilnehmerstation des Teilnehmers erstellt werden. Auf diese Weise kann eine netzbetreiberunabhängige Erstellung der Befehlsnachricht allein mittels Modulen der Teilnehmerstation ohne Module des Netzbetreibers, wie beispielsweise eines Identifikationsmoduls, realisiert werden.

Eine von Modulen der Teilnehmerstation unabhängige Erstellung der Befehlsnachricht und der Mitteilung ist hingegen mittels eines Identifikationsmoduls möglich, das beispielsweise vom Netzbetreiber zur Verfügung gestellt wird. Die Befehlsnachricht kann dann unabhängig vom Typ der Teilnehmerstation erstellt werden, wodurch eine hohe Kompatibilität bei gleichzeitiger Vielfalt von Teilnehmerstationen bezüglich deren Funktionalität und Verarbeitungsmodule erreicht werden kann.

Vorteilhaft ist auch, daß die Befehlsnachricht als SMS-Nachricht gemäß dem GSM-Standard und die Mitteilung als erste Kopfinformation und/oder zweite Kopfinformation für die Zentralstation an das Telekommunikationsnetz abgesetzt werden. Dadurch wird eine Lesbarkeit der Befehlsnachricht bei jeder SMS-fähigen Zentralstation gewährleistet.

Ein weiterer Vorteil besteht darin, daß die Informationen über den Aufbau und/oder den Inhalt der Kurznachricht aus Angaben über den Aufbau und/oder den Inhalt mindestens zweier Teile der Kurznachricht generiert werden, wobei die Angaben aus diesen Teilen erhalten werden. Auf diese Weise muß der erste Teil der Kurznachricht nicht mit Informationen über den Aufbau und/oder den Inhalt der gesamten Kurznachricht versehen sein, so daß er besser für die Übertragung der entsprechenden Kurznachricht selbst genutzt werden kann.

### Zeichnung

Ausführungsbeispiele der Erfindung sind in der Zeichnung dargestellt und in der nachfolgenden Beschreibung näher erläutert. Es zeigen Figur 1 ein erstes Blockschaltbild für die Übertragung von Kurznachrichten in einem Telekommunikationsnetz, Figur 2 einen allgemeinen Aufbau eines Übertragungsrahmens, Figur 3 ein konkretes Beispiel für einen Aufbau eines Übertragungsrahmens, Figur 4 ein zweites Blockschaltbild für die Übertragung von Kurznachrichten in einem Telekommunikationsnetz und Figur 5 den Aufbau einer Mitteilung mit Informationen über den Aufbau und/oder den Inhalt einer Kurznachricht.

### Beschreibung des Ausführungsbeispiels

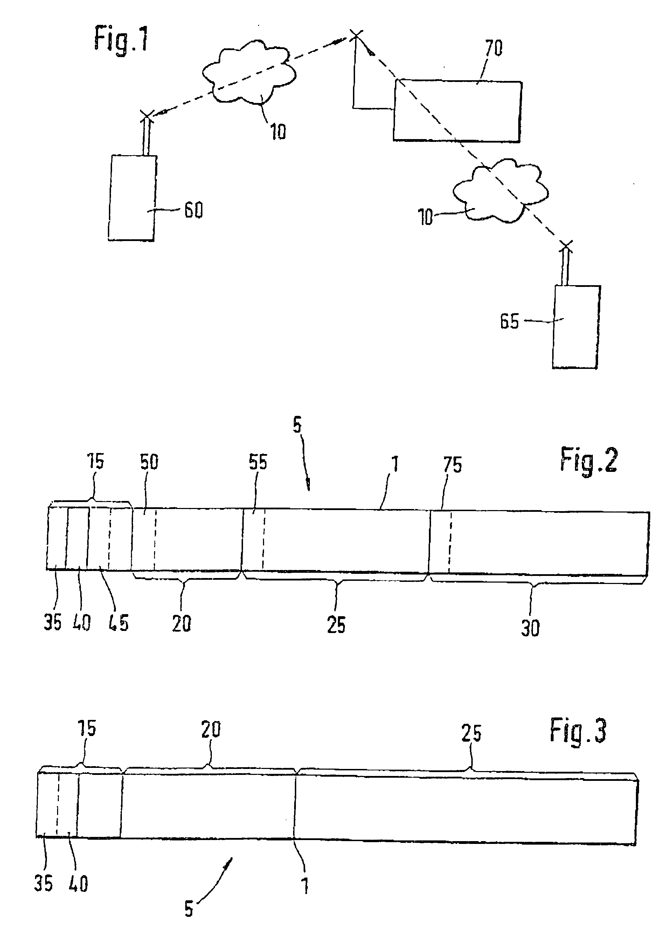

In Figur 1 kennzeichnet 60 einen ersten Teilnehmer und 65 einen zweiten Teilnehmer eines Telekommunikationsnetzes 10, das insbesondere als Funktelekommunikationsnetz, beispielsweise als Mobilfunknetz ausgebildet ist. Der erste Teilnehmer 60 und der zweite Teilnehmer 65 sind jeweils als Telekommunikationsgerät oder Teilnehmerstation, insbesondere als Funkeinheit, beispielsweise als Mobilfunkgerät, als Betriebsfunkgerät, als Handfunkgerät, oder dergleichen ausgebildet. In Figur 1 ist außerdem ein Netzbetreiber 70 des Telekommunikationsnetzes 10 dargestellt, der ebenfalls als Telekommunikationsgerät, insbesondere als Funkeinheit ausgebildet und als Zentralstation bezeichnet werden kann. Die Zentralstation kann dabei auch einem vom Netzbetreiber verschiedene externen Diensteanbieter zugeordnet sein. Im folgenden soll sie beispielhaft jedoch dem Netzbetreiber 70 zugeordnet sein.

In einem ersten Ausführungsbeispiel wird gemäß Figur 1 beim zweiten Teilnehmer 65 eine Kurznachricht 5 für den ersten Teilnehmer 60 erstellt und mit entsprechender Adressierung über das Telekommunikationsnetz 10 an den Netzbetreiber 70 abgestrahlt.

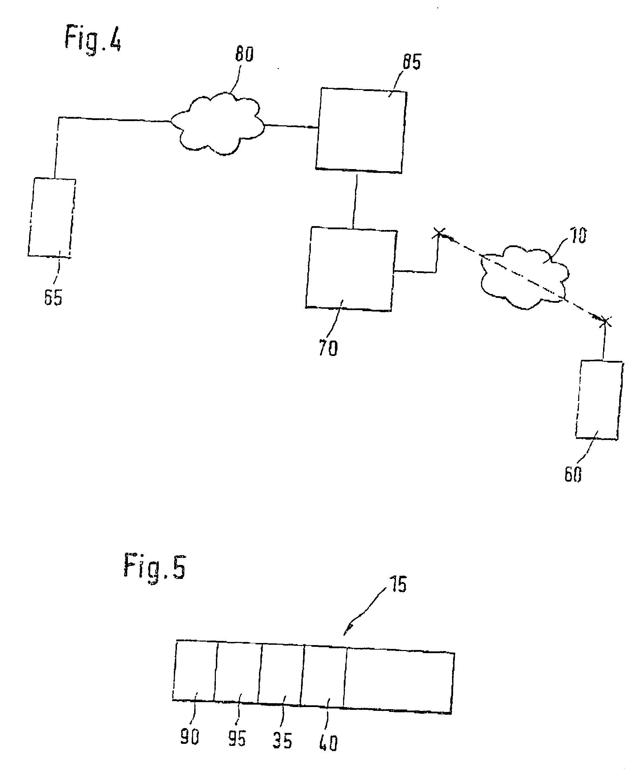

In einem zweiten Ausführungsbeispiel gemäß Figur 4 kennzeichnen gleiche Bezugszeichen gleiche Elemente. Im Unterschied zum ersten Ausführungsbeispiel ist der zweite Teilnehmer 65 nicht über das Telekommunikationsnetz 10 sondern über ein Datennetz 80, das beispielsweise als Internet ausgebildet sein kann, und eine Netzanschlußeinheit 85 mit dem Netzbetreiber 70 verbunden. Die beim zweiten Teilnehmer 65 erstellte Kurznachricht wird dabei beispielsweise als elektronische Post, beispielsweise als E-Mail, über das Datennetz 80 und die Netzanschlußeinheit 85 mit entsprechender Adressierung an den Netzbetreiber 70 versendet.

Bei beiden Ausführungsbeispielen speichert der Netzbetreiber 70 die Kurznachricht 5 und sendet dem ersten Teilnehmer 60 eine Nachricht zu, wonach dieser über das Vorliegen einer an ihn adressierten Kurznachricht 5 informiert wird. Diese Nachricht kann dem ersten Teilnehmer 60 beispielsweise zugesandt werden, wenn der Netzbetreiber 70 eine Aktivierung des ersten Teilnehmers 60 feststellt. Fordert der erste Teilnehmer 60 nach Empfang der genannten Nachricht den Metzbetreiber 70 zur Übertragung der Kurznachricht 5 auf, so sendet der Netzbetreiber 70 an den ersten Teilnehmer 60 zunächst eine Mitteilung, die den ersten Teilnehmer 60 über Aufbau und/oder Inhalt der Kurznachricht 5 informiert. Dieser Mechanismus wird auch als Poll-Service bezeichnet. Der erste Teilnehmer 60 kann anschließend die Kurznachricht 5 teilweise oder vollständig vom Netzbetreiber 70 herunterladen, so daß die Kurznachricht 5 teilweise oder vollständig vom Netzbetreiber 70 zum ersten Teilnehmer 60 übertragen wird.

Es kann jedoch auch vorgesehen sein, daß die Mitteilung ohne vorheriges Absenden einer Nachricht umgehend an den ersten Teilnehmer 60 versendet wird beziehungsweise sobald eine Aktivierung des ersten Teilnehmers 60 festgestellt wird. Dieser Mechanismus wird als Push-Service bezeichnet.

Beim Netzbetreiber 70 kann für den ersten Teilnehmer 60 festgelegt sein, ob der Push- oder der Poll-Mechanismus angewendet werden soll.

In Figur 2 ist der Aufbau einer solchen Kurznachricht 5 dargestellt. Die Kurznachricht 5 wird dabei in einem Übertragungsrahmen 1 vom zweiten Teilnehmer 65 zum Netzbetreiber 70 übertragen. Der Übertragungsrahmen 1 umfaßt ein erstes Datenfeld 15, ein zweites Datenfeld 20, gegebenenfalls ein drittes Datenfeld 25 und ein viertes Datenfeld 30. Das erste Datenfeld 15 umfaßt eine erste Kennung 35, die den Aufbau der Kurznachricht 5 kennzeichnet. Zusätzlich kann im ersten Datenfeld 15 eine zweite Kennung 40 vorgesehen sein, die den Inhalt der Kurznachricht 5 kennzeichnet. Die erste Kennung 35 und die zweite Kennung 40 können auch zu einer einzigen Kennung zusammengepaßt sein, die den Aufbau und/oder den Inhalt der Kurznachricht 5 kennzeichnet. Im ersten Datenfeld 15 sind außerdem Daten eines ersten Datenformats abgelegt. Im zweiten Datenfeld 20 sind Daten eines vom ersten Datenformat verschiedenen zweiten Datenformats abgelegt. In den gegebenenfalls vorhandenen weiteren Datenfelder 25, 30 sind ebenfalls Daten abgelegt, deren Datenformat vom Datenformat des ersten Datenfeldes 15 oder des zweiten Datenfeldes 20 verschieden sein kann, aber nicht muß. Sind mehr als zwei Datenfelder im Übertragungsrahmen 1 vorgesehen, so sind zumindest in zwei der Datenfelder Daten unterschiedlichen Formats abgelegt, wobei die Position dieser Datenfelder im Übertragungsrahmen 1 unerheblich ist.

Durch gestrichelte Linien in Figur 2 ist angedeutet, daß das erste Datenfeld 15 zusätzlich eine erste datenfeldspezifische Kennung 45 umfassen kann, die den Aufbau und/oder den Inhalt des ersten Datenfeldes 15 kennzeichnet. Entsprechend kann das zweite Datenfeld 20 eine zweite datenfeldspezifische Kennung 50 umfassen, die den Aufbau und/oder den Inhalt des zweiten Datenfeldes 20 kennzeichnet. Entsprechend kann das dritte Datenfeld 25 eine dritte datenfeldspezifische Kennung 55 umfassen, die den Aufbau und/oder den Inhalt des dritten Datenfeldes 25 kennzeichnet und das vierte Datenfeld 30 kann eine vierte datenfeldspezifische Kennung 75 umfassen, die den Aufbau und/oder den Inhalt des vierten Datenfeldes 30 kennzeichnet.

Die erste Kennung 35 kann Angaben über die Anzahl der Datenfelder 15, 20, 25, 30 in der Kurznachricht 5 umfassen. Zusätzlich oder alternativ kann die erste Kennung 35 Angaben über die Datenformate der in den Datenfeldern 15, 20, 25, 30 abgelegten Daten umfassen. Zusätzlich oder alternativ können auch Angaben über die Größe der Datenfelder 15, 20, 25, 30 in der ersten Kennung 35 enthalten sein. Die zweite Kennung 40 kann dann Angaben über die Datenart der in den Datenfeldern 15, 20, 25, 30 abgelegten Daten umfassen. So kann die zweite Kennung 40 beispielsweise Angaben darüber enthalten, ob in einem Datenfeld Audiodaten oder Bilddaten abgelegt sind.

Es kann nun vorgesehen sein, daß der Netzbetreiber 70 auf Anforderung des ersten Teilnehmers 60 das erste Datenfeld 15 mit der ersten Kennung 35 und der zweiten Kennung 40 als Mitteilung an den ersten Teilnehmer 60 übermittelt, so daß der erste Teilnehmer 60 aufgrund der in der ersten Kennung 35 und der zweiten Kennung 40 übertragenen Informationen über den Aufbau und/oder den Inhalt der Kurznachricht 5 prüfen kann, welche Datenfelder der Kurznachricht 5 er aufgrund seiner Funktionalität vom Netzbetreiber 70 herunterladen und/oder wiedergeben kann. Außerdem kann beim ersten Teilnehmer 60 eine Entscheidung darüber getroffen werden, welche der lesbaren Datenfelder der Kurznachricht 5 überhaupt vom Netzbetreiber 70 heruntergeladen werden sollen, wenn nicht alle lesbaren Datenfelder der Kurznachricht 5 beim ersten Teilnehmer 60 von Interesse sind und Übertragungskapazität eingespart werden soll. Wenn nach der Aufforderung des ersten Teilnehmers 60 das gesamte erste Datenfeld 15 mit der ersten Kennung 35 und der zweiten Kennung 40 an den ersten Teilnehmer 60 übertragen werden soll, so sollte möglichst gewährleistet sein, daß die im ersten Datenfeld 15 abgelegten Daten in einem von allen Teilnehmern des Telekommunikationsnetzes 10 lesbaren Datenformat vorliegen. Dies ist insbesondere dann gegeben, wenn die im ersten Datenfeld 15 abgelegten Daten zusammen mit den Daten in der ersten Kennung 35 und in der zweiten Kennung 40 in einem Textformat vorliegen, wobei sich beispielsweise das SMS-Format (Short-Message-Service) gemäß dem GSM-Standard (Global System for Mobile Communications) anbietet, da es in einem nach den Anforderungen des GSM-Systems ausgebildeten Telekommunikationsnetz von den nach dem GSM-Standard ausgebildeten Teilnehmern bzw. Mobilfunkgeräten dieses Telekommunikationsnetzes lesbar ist. Dabei kann das erste Datenfeld 15 dem für den SMS-Kurznachrichtendienst nach dem GSM-Standard bisher schon vorgeschriebenen Datenfeld entsprechen und in seiner Größe auf die 160 7-Bit ASCII-Textzeichen (American Standard Code for Information Interchange) beschränkt sein. Die Übertragung von längeren Mitteilungen ist mit Hilfe von verketteten SMS-Kurznachrichten möglich.
Die anderen Datenfelder 20, 25, 30 müssen in ihrer Größe nicht beschränkt sein.

Auch die datenfeldspezifischen Kennungen 45, 50, 55, 75 können Angaben über die Datenformate im jeweils zugehörigen Datenfeld 15, 20, 25, 30 und/oder über die Größe des jeweils zugehörigen Datenfeldes 15, 20, 25, 30 und/oder über die Datenart in dem jeweiligen Datenfeld 15, 20, 25, 30 umfassen. Wenn vereinbart ist, daß im ersten Datenfeld 15 die Daten gemäß dem GSM-SMS-Textformat vorliegen und dieses Datenfeld beispielsweise auf 160 7-Bit ASCII-Textzeichen begrenzt ist, so kann die erste datenspezifische Kennung 45 auch entfallen. Es kann vorgesehen sein, daß in jedem Datenfeld 15, 20, 25, 30 nur Daten eines einzigen Datenformats abgelegt sind. Es kann aber auch vorgesehen sein, daß zumindest in einem der Datenfelder Daten mehrerer Datenformate abgelegt sind, insbesondere im zweiten Datenfeld 20 und/oder gegebenenfalls in einen oder mehreren weiteren Datenfeldern 25, 30. Es kann natürlich auch vorgesehen sein, daß die Kurznachricht 5 mehr als die vier in Figur 2 dargestellten Datenfelder umfaßt.

Es kann auch vorgesehen sein, daß die Mitteilung des Netzbetreibers 70 über Aufbau und/oder Inhalt der Kurznachricht 5 an den ersten Teilnehmer 60 nach dessen Aufforderung vom Netzbetreiber 70 durch Auswertung der datenfeldspezifischen Kennungen 45, 5C, 55, 75 erstellt und anschließend an den ersten Teilnehmer 60 gesendet wird, so daß in diesen Fall die erste Kennung 35 und die zweite Kennung 40 nicht erforderlich sind und auch das erste Datenfeld 15 nicht an den ersten Teilnehmer 60 versendet werden muß. Eine solche Vorgehensweise bietet sich besonders beim zweiten Ausführungsbeispiel an, bei dem der Netzbetreiber 70 die aus den vom Telekommunikationsnetz 10 verschiedenen Datennetz 80 kommende Kurznachricht 5 empfängt, die im allgemeinen nicht den Standards des Telekommunikationsnetzes 10 entspricht und somit nicht von allen Teilnehmern des Telekommunikationsnetzes 10 gelesen werden kann. In diesem Fall erzeugt der Netzbetreiber 70 eine von allen Teilnehmern des Telekommunikationsnetzes 10 lesbare Mitteilung über den Aufbau und/oder den Inhalt der eingegangenen Kurznachricht 5. Die vom Datennetz 80 empfangene Kurznachricht 5 kann dabei jedoch auch in einer vom beschriebenen Übertragungsrahmen 1 verschiedenen Struktur, je nach den dem Datennetz 80 zugrundeliegenden Standards vorliegen, die jedoch vom Netzbetreiber 70, gegebenenfalls nach Umwandlung in einen beschriebenen Übertragungsrahmen 1 durch die Netzanschlußeinheit 85, erkannt und ausgewertet werden muß, damit die entsprechende Mitteilung an den ersten Teilnehmer 60 erstellt werden kann. Die auf diese Weise erzeugte Mitteilung über Aufbau und/oder Inhalt der Kurznachricht 5 kann also in einem von allen Teilnehmern des Telekommunikationsnetzes 10 lesbaren Datenformat an den ersten Teilnehmer 60 versendet werden, wozu insbesondere wieder das GSM-SMS-Textformat unter Verwendung eines Datenfeldes mit beispielsweise 160 7-Bit ASCII-Textzeichen vorgesehen sein kann.

Anhand von Figur 3 wird nun ein konkretes Beispiel eines Übertragungsrahmens 1 für eine Kurznachricht 5 beschrieben. Die Kurznachricht 5 ist dabei als Multimedia-Kurznachricht ausgebildet. Gleiche Bezugszeichen in Figur 3 kennzeichnen gleiche Elemente wie in Figur 2. Dabei sind gemäß Figur 3 im Übertragungsrahmen 1 das erste Datenfeld 15, das zweite Datenfeld 20 und das dritte Datenfeld 25 vorgesehen. Datenfeldspezifische Kennungen in den einzelnen Datenfeldern 15, 20, 25 sind nicht vorgesehen. Das erste Datenfeld 15 umfaßt dabei Textdaten im ASCII-Textformat, das zweite Datenfeld 20 umfaßt Audiodaten beispielsweise gemäß dem WAV-Format (Wave) und das dritte Datenfeld 25 umfaßt Bilddaten, beispielsweise gemäß dem GIF-Format (Graphic Interchange Format). Das erste Datenfeld 15 mit den Textdaten ist entsprechend dem GSM-SMS-Kurznachrichtendienst textformatiert. Durch eine gestrichelte Linie zwischen der ersten Kennung 35 und der zweiten Kennung 40 ist in Figur 3 angedeutet, daß die erste Kennung 35 und die zweite Kennung 40 zu einer gemeinsamen Kennung zusammengefaßt sein können. Eine solche gemeinsame Kennung 35, 40 gibt die Zahl der Datenfelder 15, 20, 25 und den Inhalt sowie die Größe des zweiten Datenfeldes 20 und des dritten Datenfeldes 25 an. So könnte die gemeinsame Kennung 35, 40 folgendermaßen aussehen:
"Multipart/2/Audio/7654/Image/12345"

Diese gemeinsame Kennung 35, 40 sagt aus, daß es sich um eine Kurznachricht aus mehreren Datenfeldern gemäß dem Stichwort "Multipart" handelt. Die Ziffer "2" gibt an, daß neben dem immer vorhandenen ersten Datenfeld 15 mit den Textdaten und der Länge von 160 7-Bit ASCII-Textzeichen zwei weitere Datenfelder 20, 25 im Übertragungsrahmen 1 der Kurznachricht 5 vorliegen. Als erste Datenart in der gemeinsamen Kennung 35, 40 ist dabei "Audio" genannt, so daß aus der gemeinsamen Kennung 35, 40 hervorgeht, daß es sich bei den im zweiten Datenfeld 20 abgelegten Daten um Audiodaten handelt. Als zweites wird die Datenart "Image" in der gemeinsamen Kennung 35, 40 genannt, so daß aus der gemeinsamen Kennung 35, 40 hervorgeht, daß es sich bei den im dritten Datenfeld 25 abgelegten Daten um Bilddaten handelt. Anschließend an die Datenart ist in der gemeinsamen Kennung 35, 40 jeweils die Größe des zugehörigen Datenfeldes 20, 25 angegeben, so daß aus der gemeinsamen Kennung 35, 40 eine Länge einer im zweiten Datenfeld 20 übertragenen Audiodatei mit den Audiodaten von 7654 byte und einer im dritten Datenfeld 25 übertragenen Bilddatei mit den Bilddaten von 12345 byte hervorgeht. Für das erste Datenfeld 15 sind in der gemeinsamen Kennung 35, 40 keine Angaben erforderlich, da es sich hierbei in dem beschriebenen Beispiel immer um Textdaten handelt, die zum GSM-SMS-Textformat kompatibel und in ihrer Anzahl auf 160 7-Bit ASCII-Textzeichen beschränkt sind. Es kann zusätzlich vorgesehen sein, daß die gemeinsame Kennung 35, 40 auch das Datenformat für die Daten im zweiten Datenfeld 20 und im dritten Datenfeld 25 angibt. Für die Audiodaten im zweiten Datenfeld 20 könnte dann in der gemeinsamen Kennung 35, 40 als Datenformat das WAV-Format angegeben werden. Für die Bilddaten im dritten Datenfeld 25 könnte in der gemeinsamen Kennung 35, 40 als Datenformat das GIF-Format angegeben werden. Möglich ist aber auch, daß die Angaben "Audio" und "Image" der oben angegebenen gemeinsamen Kennung 35, 40 zugleich den Inhalt und auch das Format der in den entsprechenden Datenfeldern 20, 25 abgelegten Daten beschreiben, wobei dann beispielsweise vorausgesetzt ist, daß Audiodaten immer in einem vorgegebenen Format, beispielsweise dem WAV-Format und Bilddaten ebenfalls immer in einem vorgegebenen Format, beispielsweise dem GIF-Format im entsprechenden Datenfeld des Übertragungsrahmens 1 vorliegen. Aufgrund der an den ersten Teilnehmer 60 übermittelten gemeinsamen Kennung 35, 40 kann bei diesem entschieden werden, ob ein Herunterladen des zweiten Datenfeldes 20 und/oder des dritten Datenfeldes 25 vom Netzbetreiber 70 überhaupt sinnvoll oder gewollt ist. Wenn der erste Teilnehmer 60 nicht audiofähig ist, d.h. keine Verarbeitungs- oder Wiedergabemöglichkeit für Audiodaten besitzt, so ist ein Herunterladen der Audiodaten aus dem zweiten Datenfeld 20 vom Netzbetreiber 70 nicht sinnvoll. Wenn der erste Teilnehmer 60 nicht bildfähig ist, d.h. keine Verarbeitung oder Wiedergabe von Bilddaten beim ersten Teilnehmer 60 möglich ist, so ist ein Herunterladen von Bilddaten aus dem dritten Datenfeld 25 vom Netzbetreiber 70 ebenfalls nicht sinnvoll.

Zur Auswahl der vom Netzbetreiber 70 herunterzuladenden Datenfelder des Übertragungsrahmens 1 der Kurznachricht 5 kann es vorgesehen sein, die gemeinsame Kennung 35, 40 an einer Anzeigevorrichtung des ersten Teilnehmers 60 anzuzeigen. Somit können die Informationen über den Aufbau und/oder den Inhalt der Kurznachricht 5 beim Teilnehmer 60 aus der empfangenen Mitteilung ausgelesen und an der Anzeigevorrichtung dargestellt werden.

Die Darstellung kann dabei einer einfachen, gegebenenfalls scrollbaren, Textdarstellung an der Anzeigevorrichtung entsprechen, wie dies bei der Darstellung von empfangenen SMS-Textnachrichten üblich ist. Es kann aber auch vorgesehen sein, daß die Informationen über den Aufbau und/oder den Inhalt der Kurznachricht 5 zunächst vom ersten Teilnehmer 60 ausgewertet werden. Im Falle einer menügesteuerten Bedienungsmöglichkeit beim ersten Teilnehmer 60 kann aufgrund dieser Auswertung ein neuer Menü- oder Üntermenüpunkt erzeugt und in die bestehende Menüstruktur eingebaut werden, so daß die Informationen über den Aufbau und/oder den Inhalt der Kurznachricht 5 menügesteuert an der Anzeigevorrichtung dargestellt werden können. Die Auswertung der Informationen über den Aufbau und/oder den Inhalt der Kurznachricht 5 kann zusätzlich oder alternativ auch dahingehend erfolgen, daß die Darstellung dieser Informationen an der Anzeigevorrichtung in Form einer Verzeichnisstruktur erfolgt, die die Inhalte der Datenfelder der Kurznachricht 5 als Dateien in einem Verzeichnis auflistet. Aus einer solchen Verzeichnisstruktur kann dann beispielsweise mittels Cursorsteuerung komfortabel auf einzelne Dateien der Kurznachricht zugegriffen werden.

Die Auswertung der Informationen über den Aufbau und/oder den Inhalt der Kurznachricht 5 kann durch eine Auswerteeinheit mit entsprechenden Scftwareprogrammen in der Teilnehmerstation des ersten Teilnehmers 60 direkt und damit unabhängig vom Netzbetreiber 70 erfolgen. Voraussetzung ist natürlich, daß die dafür erforderlichen Softwareprogramme auch in der Teilnehmerstation abgelegt sind und die Auswerteeinheit die zum Anarbeiten der Softwareprogramme notwendige Hardwareplattform zur Verfügung stellt. Ansonsten ist abgesehen von der reinen Textdarstellung der Mitteilung an der Anzeigevorrichtung beispielsweise gemäß dem entsprechenden Mobilfunkstandard keine Auswertung der Informationen über den Aufbau und/oder den Inhalt der Kurznachricht 5 in der Teilnehmerstation möglich.

Zusätzlich oder alternativ zur beschriebenen Auswertung der Informationen über den Aufbau und/oder den Inhalt der Kurznachricht 5 direkt in der Teilnehmerstation kann es auch vorgesehen sein, eine netzbetreiberabhängige Auswertung vorzusehen. Dazu kann eine vom Netzbetreiber an den Benutzer der Teilnehmerstation ausgegebene Zugangsberechtigungskarte in Form eines Identifikationsmoduls dienen. Diese Karte, die beispielsweise als Chipkarte, insbesondere als SIM-Karte (Subscriber Identity Module), ausgebildet sein kann, umfaßt dann eine Auswertevorrichtung, auf der Softwareprogramme zur Auswertung der Informationen über den Aufbau und/oder den Inhalt der Kurznachricht 5 ablaufen können, die ebenfalls auf der Karte gespeichert sind. Die Zugangsberechtigungskarte ist dabei über eine besonderte Schnittstelle, beispielsweise über eine SAT-Schnittstelle (SIM Application Toolkit) mit der Teilnehmerstation verbunden. Diese Schnittstelle ermöglicht es dem Netzbetreiber 70, über die Zugangsberechtigungskarte mit entsprechender Hardwareplattform und Softwareimplentierung Aktionen auf der Teilnehmerstation auszulösen oder Daten an die Teilnehmerstation zu überspielen. So können je nach Vertrag des Benutzers mit dem Netzbetreiber eine geeignete Auswertevorrichtung und entsprechende Softwareprogramme auf der Karte zur Verfügung gestellt werden, die eine oder mehrere Optionen zur Auswertung der Informationen über den Aufbau und/oder den Inhalt der Kurznachricht 5 ermöglichen. Die Softwareprogramme können dabei vom Netzbetreiber 70 über das Telekommunikationsnetz 10 auf der Karte auch aktualisiert, erweitert oder zumindest teilweise gelöscht oder gesperrt werden. Wird die Auswertung mittels der Zugangsberechtigungskarte durchgeführt, so ist sie unabhängig vom Leistungsumfang der Teilnehmerstation selbst möglich, wobei die Darstellung der Informationen über den Aufbau und/oder den Inhalt der Kurznachricht 5 natürlich nach wie vor an der Anzeigevorrichtung der Teilnehmerstation erfolgt, wobei entsprechende Daten zwischen der Teilnehmerstation und der Zugangsberechtigungskarte über die beschriebene Schnittstelle übertragen werden.

Es kann auch vorgesehen sein, daß die Informationen über den Aufbau und/oder den Inhalt der Kurznachricht 5 auf einer weiteren Karte unabhängig sowohl von der Teilnehmerstation als auch vom Netzbetreiber 70 ausgewertet werden können. Eine solche Karte kann dabei von einem geeigneten Diensteanbieter zur Verfügung gestellt werden. Das Bezugszeichen 70 kennzeichnet in diesem Fall dann den Diensteanbieter. Diese weitere Karte kann wie die Zugangsberechtigungskarte in einen jeweils eigenen Kartenschacht mit Kartenlesevorrichtung in die Teilnehmerstation des ersten Teilnehmers 60 eingelegt werden. Es kann jedoch auch ein extern an die Teilnehmerstation angeschlossener Kartenleser für die Karte des Diensteanbieters vorgesehen sein.

Für die Auswertung der Informationen über den Aufbau und/oder den Inhalt der Kurznachricht 5 müssen diese der Auswerteeinheit der Teilnehmerstation und/oder der Auswertevorrichtung auf der Zugangsberechtigungskarte zugeführt werden. Die Auswerteeinheit beziehungsweise -vorrichtung muß dann in der Lage sein, die mit der Mitteilung übertragenen Daten als Informationen über den Aufbau und/oder den Inhalt der Kurznachricht 5 zu erkennen und sie beispielsweise von reinen Textnachrichten zu unterscheiden. Dazu umfaßt die Mitteilung, die gemäß Figur 5 als erstes Datenfeld 15 gekennzeichnet ist, eine erste Kopfinformation 90, die eine Information über den weiteren Inhalt der Mitteilung umfaßt. Die erste Kopfinformation kann dabei die Information umfassen, wonach die Mitteilung Informationen über den Aufbau und/oder den Inhalt der Kurznachricht 5 enthält. Die Auswerteeinheit beziehungsweise -vorrichtung erkennt die Mitteilung somit als Mitteilung über eine beim Netzbetreiber 70 vorliegende Kurznachricht 5 und ist dann in der Lage, die für eine vorgegebene Auswertung dieser Informationen erforderlichen Softwareprogramme auszuwählen und durchzuführen. Die erste Kopfinformation 90 ist jedoch nicht erforderlich, wenn die Auswerteeinheit beziehungsweise -vorrichtung lediglich die Auswertung von Informationen über den Aufbau und/oder den Inhalt der Kurznachricht 5 ermöglicht.

Es kann auch wie in Figur 5 dargestellt vorgesehen sein, eine zweite Kopfinformation 95 in der Mitteilung vorzusehen. Die erste Kopfinformation 90 enthält dann lediglich eine Information über das Vorhandensein der zweiten Kopfinformation 95, beispielsweise in Form eines gesetzten Bits. Die zweite Kopfinformation 95 enthält dann Informationen über die Art der durchzuführenden Auswertung der Mitteilung. Die durchzuführende Auswertung kann dabei darin bestehen, die Mitteilung lediglich in Textform an der Anzeigevorrichtung darzustellen. Handelt es sich bei der Mitteilung um Informationen über den Aufbau und/oder den Inhalt der Kurznachricht 5, so kann die zweite Kopfinformation 95 auch eine menügesteuerte Anzeige, insbesondere mit Verzeichnisstruktur, dieser Informationen für die durchzuführende Auswertung vorgerben. Die zweite Kopfinformation 95 ist somit besonders dann erforderlich, wenn zwischen mehreren auf der Auswerteeinheit beziehungsweise - Vorrichtung implementierten Auswertemöglichkeiten der Informationen über den Aufbau und/oder den Inhalt der Kurznachricht 5 gewählt werden kann.

Der ersten Kopfinformation 90 und gegebenenfalls der zweiten Kopfinformation 95 schließen sich dann im ersten Datenfeld 15 gemäß Figur 5 die erste Kennung 35 und die zweite Kennung 40 an.

Durch die Anzeige der Informationen über den Aufbau und/oder den Inhalt der Kurznachricht 5 an der Anzeigevorrichtung der Teilnehmerstation kann der Benutzer beispielsweise menügesteuert eine weitere Verarbeitung der Kurznachricht 5 oder von Teilen der Kurznachricht 5, beispielsweise eines oder mehrerer Datenfelder der Kurznachricht 5, einleiten. Dies kann durch Benutzereingabe an einer Eingabeeinheit der Teilnehmerstation beispielsweise mittels Cursorsteuerung erfolgen. Der Benutzer kann dabei nach seinen Bedürfnissen Befehlskriterien einbeziehungsweise vorgeben, nach denen die Kurznachricht 5 verarbeitet werden soll. Liegen in der Kurznachricht Videodaten vor, so kann der Benutzer beispielsweise vorgeben, daß diese Daten der Kurznachricht 5 beim Netzbetreiber 70 gelöscht werden, da er sie nicht sehen möchte oder seine Teilnehmerstation deren Darstellung nicht zuläßt. Es wird dann ausgehend von der Benutzereingabe eine Befehlsnachricht mit entsprechenden Verarbeitungskommandos erstellt und an den Netzbetreiber 70 abgesendet. Die Befehlsnachricht kann dabei ebenfalls gemäß der Erfindung in Form einer Kurznachricht 5 für den Netzbetreiber 70 an das Telekommunikationsnetz 10 abgesetzt werden, wobei eine Mitteilung entweder vorab oder zusammen mit der Befehlsnachricht an den Netzbetreiber 70 gesendet wird. Die Mitteilung kann dabei wie beschrieben aufgebaut sein und Informationen über den Aufbau und/oder den Inhalt der Befehlsnachricht umfassen. Sie kann dazu wie beschrieben mit einer ersten Kopfinformation 90 und gegebenenfalls einer zweiten Kopfinformation 95 versehen sein, um das einer Befehlsnachricht mittels der ersten Kopfinformation 90 und gegebenenfalls eine vom ersten Teilnehmer 60 gewünschte Auswertung und Verarbeitung der Befehlsnachricht mittels der zweiten Kopfinformation 95 beim Netzbetreiber 70 zu veranlassen, sofern zwischen mehreren verschiedenen Auswerte- und/oder Verarbeitungsarten gewählt werden kann. Ist nur die erste Kopfinformation 90 mit der Angabe über das Vorhandensein einer Befehlsnachricht vorhanden, so wird diese vom Netzbetreiber 70 auf eine beim Netzbetreiber 70 vorgegebene Art ausgewertet und verarbeitet.

Die Befehlsnachricht kann dabei in Form einer SMS-Nachricht gemäß dem GSM-Standard vorliegen, wobei sich die Mitteilung auf die erste Kopfinformation 90 und gegebenenfalls die zweite Kopfinformation 95 beschränkten kann. Ist nur die erste Kopfinformation 90 in der Mitteilung vorgesehen, so kann beispielsweise beim Netzbetreiber 70 lediglich eine Anzeige der Befehlsnachricht an einer Anzeigevorrichtung der Zentralstation des Netzbetreibers 70 als Auswertung beziehungsweise Verarbeitung der Befehlsnachricht vorgegeben sein. Verarbeitungen der für den ersten Teilnehmer 60 beim Netzbetreiber 70 vorliegenden Kurznachricht können dann von einem Operator auf der Grundlage der Befehlsnachricht veranlaßt werden.

Bei Vorhandensein der zweiten Kopfinformation 95 in der Mitteilung für die Befehlsnachricht kann eine vom ersten Teilnehmer 60 gewünschte Verarbeitung der für den ersten Teilnehmer 60 beim Netzbetreiber 70 vorliegenden Kurznachricht auch bereits vorgegeben sein, so daß sie beim Netzbetreiber 70 automatisch eingeleitet wird.

Die Befehlsnachricht kann jedoch beim ersten Teilnehmer 60 zusätzlich oder alternativ zur manuellen Benutzereingabe auch automatisch auf der Grundlage der ausgewerteten Informationen über den Aufbau und/oder den Inhalt der Kurznachricht 5 erstellt werden. Es kann dabei sowohl bei der automatischen wie bei der manuellen Erstellung der Befehlsnachricht vorgesehen sein, daß nur solche Befehle zur Verarbeitung der Kurznachricht 5 erzeugbar sind, die mit dem Leistungsumfang des ersten Teilnehmers 60 beziehungsweise der entsprechenden Teilnehmerstation vereinbar sind. Ist der erste Teilnehmer 60 beispielsweise nicht videofähig, so kann keine Befehlsnachricht erzeugt werden, wonach in der Kurznachricht 5 enthaltene Videodaten zum ersten Teilnehmer 60 heruntergeladen werden sollen. Vielmehr kann sogar automatisch ein Befehl in die Befehlsnachricht aufgenommen werden, wonach die entsprechenden Videodaten in der Kurznachricht 5 beim Netzbetreiber 70 gelöscht werden sollen. Die Befehlsnachricht kann auch automatisch nach vom Benutzer und/oder vom Netzbetreiber 70 vorgegebenen Befehlskriterien erstellt werden. Dazu wird beim ersten Teilnehmer 60 in der Auswerteeinheit der zugeordneten Teilnehmerstation und/oder in der Auswertevorrichtung der Zugangsberechtigungskarte ein sogenanntes Profile abgelegt, das die entsprechenden Befehlskriterien enthält. Die Befehlskriterien können dabei für verschiedene Informationen über den Aufbau und/oder den Inhalt der Kurznachricht 5 vorgegeben sein und in Abhängigkeit dieser Informationen über den Aufbau und/oder den Inhalt der Kurznachricht 5 entsprechende Befehlsnachrichten erzeugen, so daß beispielsweise bei Informationen über in der Kurznachricht 5 vorliegende Videodaten ein Befehlskriterium vorgesehen ist, das eine Befehlsnachricht zur Löschung dieser Videodaten in der Kurznachricht 5 erzeugt. Das Profile kann dabei auch zumindest teilweise beim Netzbetreiber 70 selbst abgelegt sein. Erkennt der Netzbetreiber 70 in einer für den ersten Teilnehmer 60 vorliegenden Kurznachricht 5 Videodaten, so kann er entsprechend vorliegendem Beferlskriterium gleich selbst löschen ohne den ersten Teilnehmer 60 über diese Videodaten zu informieren. Auch eine Vorgabe über die Verwendung des Push- oder des Poll-Service kann im Profile beim Netzbetreiber 70 abgelegt sein. Dabei kann beispielsweise bei mehreren vorhandenen Datenarten in der beim Netzbetreiber 70 für den ersten Teilnehmer 60 vorliegenden Kurznachricht 5 vorgesehen sein, den Push-Service und den Poll-Service jeweils für verschiedene Datenarten vorzusehen, also zum Beispiel den Push-Service für Videodaten und den Poll-Service für Audiodaten.

Entsprechend der Auswertung der Informationen über den Aufbau und/oder den Inhalt der Kurznachricht 5 kann auch die Erstellung der Befehlsnachricht netzbetreiberunabhängig mittels der Auswerteeinheit des ersten Teilnehmers 60 und/oder netzbetreiberabhängig mittels der Auswertevorrichtung auf der Zugangsberechtigungskarte erfolgen. Es kann jedoch auch vorgesehen sein, daß die Erstellung der Befehlsnachricht netzbetreiberunabhängig und unabhängig von der Teilnehmerstation des ersten Teilnehmers 60 mittels einer entsprechenden Auswertevorrichtung auf der Karte eines Diensteanbieters erfolgt, wenn auch bereits die Auswertung der Informationen über den Aufbau und/oder den Inhalt der Kurznachricht 5 auf diese Weise erfolgt.

Die Kurznachricht 5 könnte auch einen Übertragungsrahmen 1 aus genau zwei Datenfeldern 15, 20 umfassen, wobei im ersten Datenfeld 15 wie beschrieben die Textdaten mit der gemeinsamen Kennung 35, 40 vorliegen und im zweiten Datenfeld 20 mehrere Datenarten oder Medien zusammengefaßt sind. Es kann aber auch vorgesehen sein, daß N in der Kurznachricht 5 zu überragende Datenarten oder Medien auf N bzw. N+1 Datenfelder im Übertragungsrahmen 1 der Kurznachricht 5 verteilt werden. Der erste Teilnehmer 60 kann alle Datenfelder der Kurznachricht 5 einzeln oder zusammen vom Netzbetreiber 70 herunterladen.

Beim ersten Teilnehmer 60 kann auch bereits eine Auswertung der übertragenen gemeinsamen Kennung 35, 40 erfolgen, so daß ihre Anzeige an der Anzeigevorrichtung des ersten Teilnehmers 60 bereits angibt, welche Datenfelder der Kurznachricht 5 überhaupt vom Netzbetreiber 70 heruntergeladen werden können aufgrund der Funktionalität des ersten Teilnehmers 60.

Der zweite Teilnehmer 65 erzeugt eine Kurznachricht 5 im beschriebenen Übertragungsrahmen 1. Die Erzeugung eines Übertragungsrahmens 1 beim zweiten Teilnehmer 65 kann dabei einfach durch Aneinanderfügen der einzelnen Datenfelder 15, 20, 25, 30 gegebenenfalls unter Hinzufügen von jeweils einer der datenfeldspezifischen Kennungen 45, 50, 55, 75 erfolgen. Der Netzbetreiber 70 wiederum empfängt und speichert Kurznachrichten 5 im beschriebenen Übertragungsrahmen 1. Bei entsprechender Funktionalität des ersten Teilnehmers 60 kann es vorgesehen sein, den Übertragungsrahmen 1 vollständig vom Netzbetreiber 70 herunterzuladen und zum ersten Teilnehmer 60 zu übertragen. In diesem Fall empfängt der erste Teilnehmer 60 die Kurznachricht 5 im beschriebenen Übertragungsrahmen 1, speichert sie gegebenenfalls ab und/oder gibt sie optisch und/oder akustisch wieder. Der erste Teilnehmer 60 empfängt zumindest ein einzelnes Datenfeld des Übertragungsrahmens 1, speichert es gegebenenfalls ab und/oder gibt es optisch und/oder akustisch wieder. Eine Auswertung empfangener Datenfelder 15, 20, 25, 30 beim Netzbetreiber 70 und beim ersten Teilnehmer 60 kann beispielsweise aufgrund der datenfeldspezifischen Kennungen 45, 50, 55, 75 erfolgen, falls diese mit den zugehörigen Datenfeldern 15, 20, 25, 30 übertragen werden oder aufgrund der gegebenenfalls übertragenen ersten Kennung 35 und/oder zweiten Kennung 40.

Der erfindungsgemäße Ubertragungsrahmen 1 ist nicht auf die Verwendung in einem Funktelekommunikationsnetz beschränkt, sondern kann auch in einem drahtgebundenen Telekommunikationsnetz 10 zur Anwendung kommen, wobei dann auch die Teilnehmer 60, 65 und der Netzbetreiber 70 drahtgebunden sind. Es kann auch vorgesehen sein, daß einer der beiden Teilnehmer 60, 65 über ein drahtgebundenes Telekommunikationsnetz 10 und der andere der beiden Teilnehmer 60, 65 über ein drahtloses Telekommunikationsnetz 10 mit dem Netzbetreiber 70 in Verbindung steht, so daß der Übertragungsrahmen 1 sowohl für die Übertragung von Kurznachrichten 5 in dem drahtgebundenen als auch in dem drahtlosen Telekommunikationsnetz 10 geeignet ist.

Nach dem Eintreffen der Kurznachricht 5 beim Netzbetreiber 70 des Telekommunikationsnetzwerkes 10 prüft der Netzbetreiber 70, ob vom ersten Teilnehmer 60 Signalisierungsinformationen empfangen werden, die eine Aktivierung des ersten Teilnehmers 60 kennzeichnen. Daraufhin sendet der Netzbetreiber 70 dem ersten Teilnehmer 60 eine Nachricht, die den ersten Teilnehmer 60 über das Vorhandensein einer an ihn abgesetzten und beim Netzbetreiber 70 gespeicherten Kurznachricht 5 informiert. Daraufhin kann beim ersten Teilnehmer 60 entschieden werden, ob Angaben über den Aufbau und/oder den Inhalt der Kurznachricht 5 vom Netzbetreiber 70 angefordert werden sollen. Ist dies der Fall, so wird vom ersten Teilnehmer 60 ein entsprechendes Aufforderungssignal über das Telekommunikationsnetz 10 an den Netzbetreiber 70 übertragen. Der Netzbetreiber 70 erzeugt daraufhin eine Mitteilung, die Informationen über den Aufbau und/oder den Inhalt der Kurznachricht 5 umfaßt und sendet diese Mitteilung über das Telekommunikationsnetz 10 an den ersten Teilnehmer 60. Die Mitteilung kann dabei beispielsweise das erste textbasierte Datenfeld 15 im Übertragungsrahmen 1 der Kurznachricht 5 umfassen, das die erste Kennung 35 und die zweite Kennung 40 gemäß Figur 2 und Figur 3 umfaßt. Es kann aber auch vorgesehen sein, daß das erste Datenfeld 15 der Kurznachricht 5 weder die erste Kennung 35 noch die zweite Kennung 40 sondern lediglich die erste datenfeldspezifische Kennung 45 umfaßt. Der Netzbetreiber 70 kann dann die Mitteilung über den Aufbau und/oder den Inahlt der Kurznachricht 5 durch Auswertung aller datenfeldspezifischen Kennungen 45, 50, 55, 75 erstellen und beispielsweise ein textbasiertes Datenfeld für die Übertragung der so erstellten Mitteilung erzeugen, das von möglichst allen Teilnehmern des Telekommunikationsnetzes 10 lesbar ist. Dieses textbasierte Datenfeld kann dabei nach dem GSM-SMS-Textformat mit einer Größe von bis zu 160 7-Bit ASCII-Textzeichen realisiert werden. Die von dem Netzbetreiber 70 erzeugte Mitteilung kann somit Informationen über den Aufbau der Kurznachricht 5 umfassen, die beispielsweise Angaben über die Anzahl der Datenfelder 15, 20, 25, 30 und/oder über die Datenformate der in den Datenfeldern 15, 20, 25, 30 abgelegten Daten und/oder über die Größe der Datenfelder 15, 20, 25, 30 beinhalten können. Die vom Netzbetreiber 70 erzeugte Mitteilung kann auch Informationen über den Inhalt der Kurznachricht 5 umfassen, die Angaben über das Vorhandensein verschiedener Datenarten in den verschiedenen Datenfeldern 15, 20, 25, 30 der Kurznachricht 5 beinhalten können. Für den Fall, daß die Mitteilung die erste Kennung 35 und die zweite Kennung 40 umfaßt, werden die Informationen über den Aufbau der Kurznachricht 5 mit der ersten Kennung 35 und die Informationen über den Inhalt der Kurznachricht 5 mit der zweiten Kennung 40 in der entsprechenden Mitteilung vom Netzbetreiber 70 zum ersten Teilnehmer 60 übertragen. Die vom Netzbetreiber 70 zum ersten Teilnehmer 60 übertragene Mitteilung kann zusätzliche Angaben über den zweiten Teilnehmer 65 als Absender der in der Kurznachricht 5 gespeicherten Daten umfassen. Auf diese Weise wird der erste Teilnehmer 60 über den Absender der Kurznachricht 5 informiert Aufgrund der vom Netzbetreiber 70 über das Telekommunikationsnetz 10 zum ersten Teilnehmer 50 übertragenen Mitteilung kann bei dem ersten Teilnehmer 60 entschieden werden, welche Datenfelder 15, 20, 25, 30 der Kurznachricht 5 überhaupt vom ersten Teilnehmer 60 lesbar sind und welche der lesbaren Datenfelder vom Netzbetreiber 70 heruntergeladen werden sollen. Dazu sendet der erste Teilnehmer 60 eine entsprechende als Auswahlnachricht ausgebildete Befehlsnachricht über das Telekommunikationsnetz 10 an den Netzbetreiber 70, in der mindestens eines der Datenfelder 15, 20, 25, 30 der Kurznachricht 5 vom Netzbetreiber 70 des Telekommunikationsnetzes 10 angefordert wird. Die vom ersten Teilnehmer 60 angeforderten Datenfelder der Kurznachricht 5 werden dann vom Netzbetreiber 70 über das Telekommunikationsnetz 10 zum ersten Teilnehmer 60 übertragen und dort gegebenenfalls nach einer Vorverarbeitung zur Wiedergabe an einer Figur 1 nicht dargestellten Wiedergabevorrichtung gebracht. Werden zwei oder mehrere Datenfelder mittels der Auswahlnachricht vom ersten Teilnehmer 60 angefordert, so können diese entweder gemeinsam oder zeitlich getrennt vom Netzbetreiber 70 zum ersten Teilnehmer 60 übertragen werden.

Es kann auch vorgesehen sein, daß beim ersten Teilnehmer 60 nach Empfang und Wiedergabe der Mitteilung über den Aufbau und/oder den Inhalt der Kurznachricht 5 ein oder mehrere Datenfelder ausgewählt werden, die beim Netzbetreiber 70 gelöscht oder an einen weiteren Teilnehmer des Telekommunikationsnetzes 10 oder des Datennetzes 80 weitergeleitet werden sollen, beispielsweise weil sie vom ersten Teilnehmer 60 nicht lesbar oder wiedergebbar sind. Dazu sendet der erste Teilnehmer 60 im Falle des Löschungswunsches eine als Löschungsnachricht ausgebildete Befehlsnachricht über das Telekommunikationsnetz 10 an den Netzbetreiber 70, wobei in der Löschungsnachricht die Datenfelder der Kurznachricht 5 angegeben sind, die gelöscht werden sollen. Der Netzbetreiber 70 löscht dann gemäß den Angaben in der Löschungsnachricht die entsprechenden Datenfelder der Kurznachricht 5 aus einem in Figur 1 nicht dargestellten Speicher. Im Falle des Weiterleitungswunsches sendet der erste Teilnehmer 60 eine als Weiterleitungsnachricht ausgebildete Befehlsnachricht über das Telekommunikationsnetz 10 an den Netzbetreiber 70, wobei in der Weiterleitungsnachricht die Datenfelder der Kurznachricht 5 angegeben sind, die weitergeleitet werden sollen. In der Weiterleitungsnachricht ist außerdem durch entsprechende Adressierung angegeben, an welchen oder an welche Teilnehmer die Datenfelder weitergeleitet werden sollen. Der Netzbetreiber 70 leitet dann gemäß den Angaben in der Weiterleitungsnachricht die entsprechenden Datenfelder der Kurznachricht 5 an den oder die adressierten Teilnehmer weiter, wobei verschiedene Datenfelder der Kurznachricht 5 an verschiedene oder gleiche Teilnehmer weitergeleitet werden können.

Selbstverständlich können beim ersten Teilnehmer 60 mittels der Auswahlnachricht auch alle Datenfelder 15, 20, 25, 30 der Kurznachricht 5 zum Herunterladen beim Netzbetreiber 70 angefordert werden. Genauso können mittels der Löschungsnachricht sämtliche Datenfelder 15, 20, 25, 30, also die gesamte Kurznachricht 5 zur Löschung beim Netzbetreiber 70 freigegeben werden.

Die Anforderung von Datenfeldern soll nun beispielhaft anhand des in Figur 3 dargestellten Übertragungsrahmens 1 konkret beschrieben werden. Auf die Nachricht über das Vorhandensein einer an ihn abgesetzten Kurznachricht 5 sendet der erste Teilnehmer 60 als Aufforderungssignal das Kommando "get MMK Content" (MMK=Multimedia-Kurznachricht) an den Netzbetreiber 70. Daraufhin empfängt der erste Teilnehmer 60 vom Netzbetreiber 70 eine Mitteilung die den Aufbau und den Inhalt der Multimedia-Kurznachricht 5 gemäß Figur 3 beschreibt. Diese Mitteilung ist dann beispielsweise die oben beschriebene Mitteilung "Multipart/2/Audio/7654/Image/12345". Aus dieser Mitteilung kann beim ersten Teilnehmer 60 nun erkannt werden, aus wieviel Datenfeldern 15, 20, 25 die Multimedia-Kurznachricht 5 besteht. Im beschriebenen Bespiel wird erkannt, daß die Multimedia-Kurznachricht 5 aus drei Datenfeldern 15, 20, 25 besteht. Darüberhinaus wird beim ersten Teilnehmer 60 erkannt, daß es sich bei den im ersten Datenfeld 15 abgelegten Daten um ASCII-Textdaten, bei dem im zweiten Datenfeld 20 abgelegten Daten um Audiodaten und bei den im dritten Datenfeld 25 abgelegten Daten um Bilddaten handelt. Die Mitteilung des Netzbetreibers 70 könnte dabei zusätzlich Angaben darüber enthalten, daß die Audiodaten beispielsweise im WAV-Format und die Bilddaten beispielsweise im GIF-Format in den entsprechenden Datenfeldern 20, 25, der Kurznachricht 5 vorliegen. Mit der Auswahlnachricht "Get MMK (x)" kann nun das x-te Datenfeld 15, 20, 25 vom Netzbetreiber 70 angefordert werden, wobei x=1,2 oder 3 ist. So werden nach dem Senden der Auswahlnachricht "get MMK (2)" dem ersten Teilnehmer 60 vom Netzbetreiber 70 die Audiodaten des zweiten Datenfeldes 20 zugesandt. Mehrere Datenfelder lassen sich durch eine Auswahlnachricht "get MMK (x, y, ...)" vom Netzbetreiber anfordern.

Es kann weiterhin vorgesehen sein, daß der Netzbetreiber 70 nach Empfang einer wie beschrieben aufgebauten Kurznachricht 5 vom zweiten Teilnehmer 65 eine Quittierungsnachricht zur Quittierung des Empfangs der Kurznachricht 5 erzeugt und für den zweiten Teilnehmer 65 an das Telekommunikationsnetz 10 gemäß dem ersten Ausführungsbeispiel nach Figur 1 absetzt. Die Quittierungsnachricht kann dabei ebenfalls die Form einer wie beschrieben aufgebauten Kurznachricht haben, wobei eine Mitteilung an den Sender in Abhängigkeit der Quittierungsnachricht gesendet wird und mit der Mitteilung Daten zum Sender übertragen werden, die Informationen über den Aufbau und/oder den Inhalt der Quittierungsnachricht umfassen. Wie bei der beschriebenen Befehlsnachricht kann es dabei vorgesehen sein, daß die Quittierungsnachricht als SMS-Nachricht gemäß dem GSM-Standard und die Mitteilung als erste Kopfinformation 90 und gegebenfalls als zweite Kopfinformation 95 für den zweiten Teilnehmer 65 an das Telekommunikationsnetz 10 abgesetzt werden.

Ist nur die erste Kopfinformation 90 in der Mitteilung vorgesehen, so kann beispielsweise beim zweiten Teilnehmer 65 lediglich eine Anzeige der Quittierungsnachricht an einer Anzeigevorrichtung der Teilnehmerstation des zweiten Teilnehmers 65 als Auswertung beziehungsweise Verarbeitung der Quittierungsnachricht vorgegeben sein.

Bei Vorhandensein der zweiten Kopfinformation 95 in der Mitteilung für die Quittierungsnachricht kann eine vom Netzbetreiber 70 gewünschte Verarbeitung der Quittierungsnachricht auch bereits vorgegeben sein, so daß sie beim zweiten Teilnehmer 65 automatisch eingeleitet wird.

In analoger Weise kann auch eine Quittierungsnachricht vom Netzbetreiber 70 für den ersten Teilnehmer 60 an das Telekommunikationsnetz 10 abgegeben werden, mit der der Netzbetreiber 70 den Empfang einer Befehlsnachricht quittieren kann.

Ebenso kann in entsprechender Weise auch eine Quittierungsnachricht vom ersten Teilnehmer 60 für den Netzbetreiber 70 an das Telekommunikationsnetz 10 abgegeben werden, mit der der erste Teilnehmer 60 den Empfang einer Mitteilung quittieren kann.

Es kann auch vorgesehen sein, die Auswertung der Informationen über den Aufbau und/oder den Inhalt der Kurznachricht 5 und/oder die Erstellung von Befehlsnachrichten zumindest teilweise in einer von der Teilnehmerstation des ersten Teilnehmers 60 abgesetzten externen Einheit, beispielsweise einem Personal Computer, durchzuführen und auch die Anzeigevorrichtung zur Darstellung der Informationen über den Aufbau und/oder den Inhalt der Kurznachricht 5 bei der externen Einheit, insbesondere in Form eines Monitors, vorzusehen.

## Patentansprüche

1. Verfahren zur Übertragung von Kurznachrichten (5) in einem Telekommunikationsnetz (10), insbesondere in einem Funktelekommunikationsnetz, wobei eine Mitteilung an einen Teilnehmer (60) des Telekommunikationsnetzes (10) in Abhängigkeit einer für den Teilnehmer (60) an das Telekommunikationsnetz (10) abgesetzten Kurznachricht (5) gesendet wird, wobei mit der Mitteilung Daten zum Teilnehmer (60) übertragen werden, die Informationen über den Aufbau und/ oder den Inhalt der Kurznachricht (5) umfassen,
**dadurch gekennzeichnet,**
**dass** mit der Mitteilung eine erste Kopfinformation (90) und eine Nachricht zum Teilnehmer übertragen werden,
wobei die erste Kopfinformation (90) eine Information über den Inhalt der Nachricht
und die Nachricht die Informationen über den Aufbau und/oder Inhalt der Kurznachricht (5) umfasst,
**dass** mit der Nachricht eine zweite Kopfinformation (95) und Nutzdaten zum Teilnehmer (60) übertragen werden, wobei die erste Kopfinformation (90) eine Information über das Vorhandensein der zweiten Kopfinformation (95)
und die zweite Kopfinformation (95) mindestens eine Information über die Art einer durchzuführenden Auswertung der Mitteilung umfasst.

2. Verfahren nach Anspruch 1, **dadurch gekennzeichnet, dass** die erste Kopfinformation (90) und die zweite Kopfinformation (95) in der Mitteilung vorgesehen werden.

3. Verfahren nach Anspruch 1, **dadurch gekennzeichnet, dass** die Mitteilung die erste Kopfinformation (90) und die zweite Kopfinformation (95) umfasst.

4. Verfahren nach einem der Ansprüche 1 bis 3, **dadurch gekennzeichnet, dass** als Mitteilung ein erstes Datenfeld (15) der Kurznachricht (5), das die Daten mit den Informationen über den Aufbau und/oder den Inhalt der Kurznachricht (5) umfasst, zum Teilnehmer (60) übertragen wird.

5. Verfahren nach Anspruch 4, **dadurch gekennzeichnet, dass** das erste Datenfeld (15) eine erste Kennung (35) und eine zweite Kennung (40), die den Aufbau und/oder den Inhalt der Kurznachricht (5) kennzeichnen, umfasst und dass der ersten Kopfinformation (90) und der zweiten Kopfinformation (95) in dem ersten Datenfeld (15) sich die erste Kennung (35) und die zweite Kennung (40) anschließen.

6. Mitteilung, die an einen Teilnehmer (60) in einem Telekommunikationsnetzes (10), insbesondere in einem Funktelekommunikationsnetz, in Abhängigkeit einer für den Teilnehmer (60) an das Telekommunikationsnetz (10) abgesetzten Kurznachricht (5) gesendet wird, wobei mit der Mitteilung Daten zum Teilnehmer (60) übertragen werden, die Informationen über den Aufbau und/oder den Inhalt der Kurznachricht (5) umfassen,
**dadurch gekennzeichnet,**
**dass** die Mitteilung eine erste Kopfinformation (90), eine Nachricht und eine zweite Kopfinformation (95) umfasst,
wobei die erste Kopfinformation (90) eine Information über den Inhalt der Nachricht
und die Nachricht die Informationen über den Aufbau und/oder Inhalt der Kurznachricht (5) umfasst,
wobei die erste Kopfinformation (90) eine Information über das Vorhandensein der zweiten Kopfinformation (95)
und die zweite Kopfinformation (95) mindestens eine Information über die Art einer durchzuführenden Auswertung der Mitteilung umfasst.

7. Mitteilung nach Anspruch 6, **dadurch gekennzeichnet, dass** als die Mitteilung ein erstes Datenfeld (15) der Kurznachricht (5), das die Daten mit den Informationen über den Aufbau und/oder den Inhalt der Kurznachricht (5) umfasst, zum Teilnehmer (60) übertragen wird.

8. Mitteilung nach Anspruch 7, **dadurch gekennzeichnet, dass** das erste Datenfeld (15) eine erste Kennung (35) und eine zweite Kennung (40), die den Aufbau und/oder den Inhalt der Kurznachricht (5) kennzeichnen, umfasst und dass der ersten Kopfinformation (90) und der zweiten Kopfinformation (95) in dem ersten Datenfeld (15) sich die erste Kennung (35) und die zweite Kennung (40) anschließen.

9. Teilnehmerstation (60) eines Telekommunikationsnetzes (10), insbesondere eines Funktelekommunikationsnetzes, mit einer Zugangsberechtigungskarte umfassend eine Auswertevorrichtung, auf der Softwareprogramme, die auf der Zugangsberechtigungskarte gespeichert sind, ablaufen können zur Auswertung der Informationen über den Aufbau und / oder den Inhalt der Kurznachricht (5), die mit der Mitteilung gemäß Anspruch 6, 7 oder 8 übertragen werden,
wobei die Zugangsberechtigungskarte über eine vorbestimmte Schnittstelle mit der Teilnehmerstation verbunden ist und dem Betreiber (70) des Telekommunikationsnetzes (10) ermöglicht, über die Zugangsberechtigungskarte Aktionen auf der Teilnehmerstation auszulösen oder Daten zu überspielen.

10. Übertragungsrahmen (1) für die Übertragung von Kurznachrichten (5) in einem Telekommunikationsnetz (10), insbesondere in einem Funktelekommunikationsnetz, zur Durchführung des Verfahrens gemäß einem der Ansprüche 1 bis 5,
**wobei**
mindestens zwei Datenfelder (15, 20, 25, 30) vorgesehen sind, dass in den Datenfeldern (15, 20, 25, 30) Daten der Kurznachricht (5) abgelegt sind, und dass im ersten Datenfeld (15) Daten eines ersten Datenformats und in einem zweiten Datenfeld (20) Daten eines vom ersten Datenformat verschiedenen zweiten Datenformats abgelegt sind,
in dem ersten Datenfeld (15) die erste Kennung (35) vorgesehen ist, die den Aufbau der Kurznachricht (5) kennzeichnet, und
in dem ersten Datenfeld (15) die zweite Kennung (40) vorgesehen ist, die den Inhalt der Kurznachricht (5) kennzeichnet,
wobei vorgesehen ist, dass ein Netzbetreiber (70) des Telekommunikationsnetzes (10) auf Anforderung des Teilnehmers (60) das erste Datenfeld (15) mit der ersten Kennung (35) und der zweiten Kennung (40) als Mitteilung an den Teilnehmer (60) übermitteln kann.

11. Übertragungsrahmen (1) nach Anspruch 10, **dadurch gekennzeichnet, dass** die zweite Kennung (40) Angaben über die Datenart, wie insbesondere Audio- oder Bilddaten, der in den Datenfeldern (15, 20, 25, 30) abgelegten Daten umfasst.

12. Übertragungsrahmen (1) nach einem der Ansprüche 10 bis 11, **dadurch gekennzeichnet, dass** nur das erste Datenfeld (15) in seiner Größe auf einen vorgegebenen Wert beschränkt ist.

13. Übertragungsrahmen (1) nach einem der Ansprüche 10 bis 12, **dadurch gekennzeichnet, dass** in mindestens zwei Datenfeldern (15, 20, 25, 30) jeweils eine datenfeldspezifische Kennung (45, 50, 55, 75) vorgesehen ist, die den Aufbau und/oder den Inhalt des entsprechenden Datenfeldes (15, 20, 25, 30) kennzeichnet.

14. Übertragungsrahmen (1) nach einem der Ansprüche 10 bis 13, **dadurch gekennzeichnet, dass** die im ersten Datenfeld (15) abgelegten Daten in einem von allen Teilnehmern des Telekommunikationsnetzes (10) lesbaren Datenformat vorliegen.

15. Übertragungsrahmen (1) nach einem der Ansprüche 10 bis 14, **dadurch gekennzeichnet, dass** die im ersten Datenfeld (15) abgelegten Daten in einem Textformat, insbesondere gemäß dem GSM-SMS-Format, vorliegen.

16. Übertragungsrahmen (1) nach einem der Ansprüche 10 bis 12, **dadurch gekennzeichnet, dass** in einem der Datenfelder (15, 20, 25, 30) Daten mehrerer Datenformate abgelegt sind.

## Claims

1. Method for transmitting short messages (5) in a telecommunication network (10), particularly in a radio telecommunication network, wherein a communication to a subscriber (60) in the telecommunication network (10) is sent on the basis of a short message (5) that is sent to the telecommunication network (10) for the subscriber (60), wherein the communication is accompanied by the transmission of data for the subscriber (60) that comprise information about the structure and/or the content of the short message (5), **characterized**
**in that** the communication is accompanied by the transmission of a first piece of header information (90) and a message for the subscriber, wherein the first piece of header information (90) comprises a piece of information about the content of the message
and the message comprises the information about the structure and/or content of the short message (5),
**in that** the message is accompanied by the transmission of a second piece of header information (95) and user data for the subscriber (60),
wherein the first piece of header information (90) comprises a piece of information about the presence of the second piece of header information (95)
and the second piece of header information (95) comprises at least one piece of information about the type of an evaluation to be performed for the communication.

2. Method according to Claim 1, **characterized in that** the first piece of header information (90) and the second piece of header information (95) are provided in the communication.

3. Method according to Claim 1, **characterized in that** the communication comprises the first piece of header information (90) and the second piece of header information (95).

4. Method according to one of Claims 1 to 3, **characterized in that** the communication transmitted for the subscriber (60) is a first data field (15) of the short message (5), which data field comprises the data having the information about the structure and/or the content of the short message (5).

5. Method according to Claim 4, **characterized in that** the first data field (15) comprises a first identifier (35) and a second identifier (40) that denote the structure and/or the content of the short message (5) and **in that** the first piece of header information (90) and the second piece of header information (95) in the first data field (15) are followed by the first identifier (35) and the second identifier (40).

6. Communication that is sent to a subscriber (60) in a telecommunication network (10), particularly in a radio telecommunication network, on the basis of a short message (5) that is sent to the telecommunication network (10) for the subscriber (60), wherein the communication is accompanied by the transmission of data for the subscriber (60) that comprise information about the structure and/or the content of the short message (5), **characterized**
**in that** the communication comprises a first piece of header information (90), a message and a second piece of header information (95),
wherein the first piece of header information (90) comprises a piece of information about the content of the message
and the message comprises the information about the structure and/or content of the short message (5),
wherein the first piece of header information (90) comprises a piece of information about the presence of the second piece of header information (95)
and the second piece of header information (95) comprises at least one piece of information about the type of an evaluation to be performed for the communication.

7. Communication according to Claim 6, **characterized in that** the communication transmitted for the subscriber (60) is a first data field (15) of the short message (5), which data field comprises the data having the information about the structure and/or the content of the short message (5).

8. Communication according to Claim 7, **characterized in that** the first data field (15) comprises a first identifier (35) and a second identifier (40) that denote the structure and/or the content of the short message (5) and **in that** the first piece of header information (90) and the second piece of header information (95) in the first data field (15) are followed by the first identifier (35) and the second identifier (40).

9. Subscriber station (60) in a telecommunication network (10), particularly a radio telecommunication network, having an access authorization card comprising an evaluation apparatus on which software programs that are stored on the access authorization card can run for the purpose of evaluating the information transmitted with the communication according to Claims 6, 7 or 8 about the structure and/or the content of the short message (5),
wherein the access authorization card is connected to the subscriber station via a predetermined interface and allows the operator (70) of the telecommunication network (10) to use the access authorization card to initiate actions on the subscriber station or to load data.

10. Transmission frame (1) for transmitting short messages (5) in a telecommunication network (10), particularly in a radio telecommunication network, for the purpose of performing the method according to one of Claims 1 to 5,
wherein
at least two data fields (15, 20, 25, 30) are provided, the data fields (15, 20, 25, 30) store data of the short message (5) and the first data field (15) stores data in a first data format and a second data field (20) stores data in a second data format, which is different from the first data format,
the first data field (15) has the first identifier (35) provided in it, which denotes the structure of the short message (5), and
the first data field (15) has the second identifier (40) provided in it, which denotes the content of the short message (5),
wherein provision is made for a network operator (70) of the telecommunication network (10) to be able to transmit, at the request of the subscriber (60), the first data field (15) having the first identifier (35) and the second identifier (40) to the subscriber (60) as a communication.

11. Transmission frame (1) according to Claim 10, **characterized in that** the second identifier (40) comprises details about the data type, such as particularly audio or image data, of the data stored in the data fields (15, 20, 25, 30).

12. Transmission frame (1) according to either of Claims 10 and 11, **characterized in that** only the first data field (15) has its size limited to a prescribed value.

13. Transmission frame (1) according to one of Claims 10 to 12, **characterized in that** at least two data fields (15, 20, 25, 30) each have a data-field-specific identifier (45, 50, 55, 75) provided in them that denotes the structure and/or the content of the relevant data field (15, 20, 25, 30).

14. Transmission frame (1) according to one of Claims 10 to 13, **characterized in that** the data stored in the first data field (15) are available in a data format that is readable by all subscribers in the telecommunication network (10).

15. Transmission frame (1) according to one of Claims 10 to 14, **characterized in that** the data stored in the first data field (15) are available in a text format, particularly in accordance with the GSM SMS format.

16. Transmission frame (1) according to one of Claims 10 to 12, **characterized in that** one of the data fields (15, 20, 25, 30) stores data in multiple data formats.

## Revendications

1. Procédé de transmission de messages courts (5) dans un réseau de télécommunication (10), notamment dans un réseau de radiotélécommunication, une communication à un abonné (60) du réseau de télécommunication (10) étant émise en fonction d'un message court (5) déposé pour l'abonné (60) sur le réseau de télécommunication (10), des données étant transmises à l'abonné (60) avec la communication, lesquelles contiennent des informations à propos de la structure et/ou du contenu du message court (5), **caractérisé en ce**
**qu'**une première information d'en-tête (90) et un message sont transmis à l'abonné avec la communication, la première information d'en-tête (90) comprenant une information à propos du contenu du message et le message les informations à propos de la structure et/ou du contenu du message court (5),
**qu'**une deuxième information d'en-tête (95) et des données utiles sont transmises à l'abonné (60) avec le message,
la première information d'en-tête (90) comprenant une information à propos de la présence de la deuxième information d'en-tête (95)
et la deuxième information d'en-tête (95) au moins une information à propos de la nature d'une interprétation à effectuer de la communication.

2. Procédé selon la revendication 1, **caractérisé en ce que** la première information d'en-tête (90) et la deuxième information d'en-tête (95) sont présentes dans la communication.

3. Procédé selon la revendication 1, **caractérisé en ce que** la communication comprend la première information d'en-tête (90) et la deuxième information d'en-tête (95).

4. Procédé selon l'une des revendications 1 à 3, **caractérisé en ce que** la communication transmise à l'abonné (60) est un premier champ de données (15) du message court (5) qui comprend les données avec les informations à propos de la structure et/ou du contenu du message court (5).

5. Procédé selon la revendication 4, **caractérisé en ce que** le premier champ de données (15) comprend un premier identifiant (35) et un deuxième identifiant (40) qui caractérisent la structure et/ou le contenu du message court (5), et **en ce que** le premier identifiant (35) et le deuxième identifiant (40) sont rattachés à la première information d'en-tête (90) et à la deuxième information d'en-tête (95) dans le premier champ de données (15).

6. Communication qui est envoyée à un abonné (60) dans un réseau de télécommunication (10), notamment dans un réseau de radiotélécommunication, en fonction d'un message court (5) déposé pour l'abonné (60) sur le réseau de télécommunication (10), des données étant transmises à l'abonné (60) avec la communication, lesquelles contiennent des informations à propos de la structure et/ou du contenu du message court (5), **caractérisée en ce**
**que** la communication comprend une première information d'en-tête (90), un message et une deuxième information d'en-tête (95),
la première information d'en-tête (90) comprenant une information à propos du contenu du message et le message les informations à propos de la structure et/ou du contenu du message court (5),
la première information d'en-tête (90) comprenant une information à propos de la présence de la deuxième information d'en-tête (95)
et la deuxième information d'en-tête (95) au moins une information à propos de la nature d'une interprétation à effectuer de la communication.

7. Communication selon la revendication 6, **caractérisée en ce que** la communication transmise à l'abonné (60) est un premier champ de données (15) du message court (5) qui comprend les données avec les informations à propos de la structure et/ou du contenu du message court (5).

8. Communication selon la revendication 7, **caractérisée en ce que** le premier champ de données (15) comprend un premier identifiant (35) et un deuxième identifiant (40) qui caractérisent la structure et/ou le contenu du message court (5), et **en ce que** le premier identifiant (35) et le deuxième identifiant (40) sont rattachés à la première information d'en-tête (90) et à la deuxième information d'en-tête (95) dans le premier champ de données (15).

9. Station d'abonné (60) d'un réseau de télécommunication (10), notamment d'un réseau de radiotélécommunication, munie d'une carte d'autorisation d'accès comprenant un dispositif d'interprétation sur lequel peuvent être exécutés des programmes logiciels, lesquels sont enregistrés sur la carte d'autorisation d'accès, pour interpréter les informations à propos de la structure et/ou du contenu du message court (5) qui sont transmises avec la communication selon la revendication 6, 7 ou 8,
la carte d'autorisation d'accès étant reliée à la station d'abonné par le biais d'une interface prédéfinie et permet à l'exploitant (70) du réseau de télécommunication (10), par le biais de la carte d'autorisation d'accès, de déclencher des actions sur la station d'abonnée ou de réenregistrer des données.

10. Trame de transmission (1) pour la transmission de messages courts (5) dans un réseau de télécommunication (10), notamment dans un réseau de radiotélécommunication, pour la mise en oeuvre du procédé selon l'une des revendications 1 à 5,
au moins deux champs de données (15, 20, 25, 30) étant présents, des données du message court (5) étant déposées dans les champs de données (15, 20, 25, 30) et des données d'un premier format de données étant déposées dans le premier champ de données (15) et des données d'un deuxième format de données, différent du premier format de données, étant déposées dans le deuxième champ de données (20),
le premier identifiant (35), qui caractérise la structure du message court, se trouvant dans le premier champ de données (15), et
le deuxième identifiant (40), qui caractérise le contenu du message court (5), se trouvant dans le premier champ de données (15),
selon l'invention, un exploitant de réseau (70) du réseau de télécommunication (10), sur demande de l'abonné (60), peut communiquer le premier champ de données (15) avec le premier identifiant (35) et le deuxième identifiant (40) sous la forme d'une communication à un abonné (60).

11. Trame de transmission (1) selon la revendication 10, **caractérisée en ce que** le deuxième identifiant (40) comprend des indications à propos de la nature des données, comme notamment des données audio ou d'image, des données déposées dans les champs de données (15, 20, 25, 30).

12. Trame de transmission (1) selon l'une des revendications 10 à 11, **caractérisée en ce que** seul le premier champ de données (15) est limité dans sa taille à une valeur prédéfinie.

13. Trame de transmission (1) selon l'une des revendications 10 à 12, **caractérisée en ce qu'**un identifiant (45, 50, 55, 75) spécifique au champ de données, lequel caractérise la structure et/ou le contenu du champ de données (15, 20, 25, 30) correspondant, se trouve respectivement dans au moins deux champs de données (15, 20, 25, 30).

14. Trame de transmission (1) selon l'une des revendications 10 à 13, **caractérisée en ce que** les données déposées dans le premier champ de données (15) sont présentes dans un format de donneés lisible par tous les abonnés du réseau de télécommunication (10).

15. Trame de transmission (1) selon l'une des revendications 10 à 14, **caractérisée en ce que** les données déposées dans le premier champ de données (15) sont présentes dans un format textuel, notamment selon le format GSM-SMS.

16. Trame de transmission (1) selon l'une des revendications 10 à 12, **caractérisée en ce que** des données en plusieurs formats de données sont déposées dans l'un des champs de données (15, 20, 25, 30).
